# EUROPEAN PATENT SPECIFICATION

(11) **EP 1 023 841 B1**
(45) Date of publication and mention of the grant of the patent: **09.08.2006**
(21) Application number: 99124736.2
(22) Date of filing: 13.12.1999
(51) Int. Cl.: A23G 3/00, C08B 31/18

(54) **Chewy confectionery product**
Kaubares Konfektprodukt
Produit de confiserie à mâcher

(30) Priority: 29.01.1999 GB 9902073
(43) Date of publication of application: 02.08.2000
(73) Proprietor: SOCIETE DES PRODUITS NESTLE S.A., 1800 Vevey (CH)
(72) Inventor: Barrett, Louise, York, North Yorkshire, YO30 5FJ (GB); Geddes, Jamie Edward, Wheelock, Sandbach, Cheshire CW11 3RN (GB); Mangano, Santi Francesco, 20015 Parabiago, Milan (IT); Schmick, Frank, Linton on Ouse, York Y030 2AG (GB); Whitehouse, Andrew Steve, Harrogate HG2 8AY (GB)
(74) Representative: Thomas, Alain

(56) References cited:
- DE-A- 2 120 859
- GB-A- 1 061 886
- US-A- 4 601 907
- US-A- 4 726 957
- US-A- 5 262 191
- US-A- 5 429 830
- DATABASE FSTA [Online] INTERNATIONAL FOOD INFORMATION SERVICE (IFIS), FRANFURT/MAIN, DE ZUBREV N I ET AL: "Use of oxidized starch in fruit jelly manufacture." Database accession no. 74-1-06-l0325 XP002131916 & KHLEBOPEKARNAYA I KONDITERSKAYA PROMYSHLENNOST',1973, Moskovskii Tekh. Inst. Pishchevoi Promyshlennosti, USSR
- PATENT ABSTRACTS OF JAPAN vol. 0133, no. 84, 24 August 1989 (1989-08-24) & JP 01 132348 A (SHIMADA KAGAKU), 24 May 1989 (1989-05-24)

## Description

The present invention relates to a chewy sweet, such as a soft centred chew. The present invention preferably provides a chewy sweet which is gelatin free. The present invention further provides a method of preparing the chewy sweet of the invention.

Chewy sugar-based or sugar-free confectionery available in the prior art contains gelatin so that it has a chewy texture which is desirable for these products. Indeed, gelatin has been used in confectionery manufacture for many years for its diverse functional properties, in particular, its textural, gel-forming, foam stabilising and emulsification properties. Of the hydrocolloids, gelatin is the most commonly used. Hydrocolloid confectionery comprising gelatin has a unique gelatin texture which is especially desirable to consumers. Chewy sweets which contain gelatin have a long-lasting cohesive chew.

However, food-grade gelatin is obtained from bovine or porcine raw materials and the use of gelatin is undesirable not only because of concerns about bovine spongiform encephalopathy (i.e. "BSE" or "mad-cow disease"), but also for the vegetarian population, as well as for certain ethnic groups who have concerns about the nature of meat used in certain food products and/or who observe certain dietary constraints concerning the consumption of meat and dairy products. In addition, as gelatin is a protein it is highly sensitive to thermal and highly acidic treatments and undergoes degradation causing loss in its functional properties, reduced cooking efficiencies, loss of active ingredient and possible fouling which necessitates frequent cleaning of the processing apparatus.

It is, therefore, desirable to provide a chewy sweet which excludes gelatin, therefore, overcoming the problems associated with gelatin, but which retains the texture and properties attributed to gelatin and preferred by the consumer. In particular, it is desirable to provide a chewy sweet which still has a long-lasting cohesive chew, but in which at least a portion, preferably all, of the gelatin is replaced in the sweet.

DE 2120859 describes a gum-like low-water-content COnfection that includes about 30 to 50wt% oxidatively modified waxy starch, sugars and water.

US 5262191 discloses a starch jelly candy comprising a cooked gelled formulation containing a sweetener, a starch blend of a low amylose starch and a high amylose starch, and water.

US 4726957 provides an acid- or enzyme-converted high amylose starch useful as a quick-setting agent in a jelly gum confection.

According to the present invention, it has surprisingly been found that by substituting gelatin with oxidised starch in a chewy sweet, it is possible to overcome the disadvantages associated with gelatin,but still provide the preferred gelatin texture.

The present invention provides a sugar-based or sugar-free chewy sweet comprising from 0.5% to 20% of oxidised starch and up to 10% of gum arabic by weight of the chewy sweet and wherein the chewy sweet is not a chewing gum, toffee, gum, or jelly.

According to an embodiment of the invention, the chewy confectionery product is preferably gelatin-free.

Preferably, the chewy sweet of the invention is filled with a liquid or syrup centre.

A chewy sweet may comprise a non-crystallised, semi-crystalline or crystallised material, such as crystallised or non-crystallised sucrose, which contains ingredients that give it a certain resistance to chew prior to dissolution, for example, ingredients such as gelatin, starches, hydrocolloids e.g. gums, pectins, etc., glucose syrups, maltodextrins. Chewy sweets may be sugar-based or sugar-free, but are generally based on a matrix of sugars which form the semi-crystalline material to support the chew resistance imparting ingredients. In general, the continuous phase of the chewy sweet supports the sucrose crystals and contains ingredients such as dissolved sugar, glucose syrup etc.
The mass phase of the chewy sweet contains fat as a separate phase. A chewy sweet is distinguished from other confectionery products such as chewing gums, which have insoluble components and are not intended to be dissolved upon chewing, toffees which contain sugars and milk derivatives as the main ingredients and are characterised by a caramelization process, gums and other hydrocolloid products, which are characterised by gelling behaviour and where sugar crystallisation is not desired, and jellies by the lack of a gel which determines the textural character.

The chewy sweet of the present invention may be a gelatin-free, centre-filled chewy sweet in which the centre filling may be, for example, a liquid or syrup , in particular, containing nutritional substances, such as, vitamins, minerals, herbal extracts, oligo saccharides etc. According to this embodiment of the invention, it is preferred that the gelatin is replaced by a combination of oxidised starch and gum arabic.

The property of gelatin which is replicated in a chewy sweet according to the present invention by replacing the gelatin with oxidised starch in combination with gum arabic, is that of obtaining a long-lasting, cohesive chew.

Oxidised starch is starch obtained from any source, such as, maize, potato etc., which has undergone an oxidation reaction. For example, oxidised starch is obtained when a (aqueous) starch suspension is treated with an oxidising agent, such as, sodium hypochlorite, which oxidises the primary alcohol group at the C6 position on the starch molecule to a carboxylic acid group. Oxidation introduces a high degree of steric hindrance into the molecule, preventing or greatly reducing the tendency for short chain fractions to reform as retrogradation bundles. The complex reaction involves hydrolysis, ring rupture and carboxylation (OH groups to COOH groups) of the starch molecule, to reduce the viscosity of the starch solution and a softer set back.

Techniques for detecting oxidised starch at a functional level (above approximately 1%) detect the carbonyl group which is specific to the oxidised starch. Suitable techniques include Fourier Transform Infra Red (FTIR) and solid state NMR.

According to the invention, the chewy sweet comprises from 0.5-20% (wt/wt) oxidised starch with 1-10%(wt/wt) gum arabic, and preferably contains oxidised starch in the range of 5-10% (wt/wt)in combination with gum arabic in the range of from 1-8% (wt/wt).

In the final product, at least the major part of the oxidised starch is gelatinised through cooking. Preferably, the oxidised starch is fully gelatinised. The chewy sweet of the present invention may typically comprise other ingredients selected from water, sugar, glucose syrup, crystalline sucrose, other hydrocolloids, colouring agents, flavourings and acids, in addition to the oxidised starch and gum arabic. When the chewy sweet of the present invention is sugar-based, it usually contains some 30% to 90%, preferably from 40% to 70%, of syrup or sugars by weight based on the weight of the chewy sweet, for example, corn syrup, glucose syrup, invert syrup, high fructose syrup, (crystalline) sucrose, fructose, maltose, and/or sugar replacements, such as, isomalt, maltitol, sorbitol, mannitol, lactitol, trehalose etc.. Different types of sugar systems can be used to manipulate the final textural properties of the chewy sweet. For example, the sugar-based chewy sweet of the present invention contains crystalline sucrose.

In addition to the oxidised starch, gum arabic and optionally sugar systems, the chewy sweet may contain usual ingredients such as a food-acceptable acid, for example, lactic acid, malic acid, tartaric acid, ascorbic acid, hydrochloric acid, citric acid, fruit juices, vegetable juices, fats etc. The amount added will depend on the final product but may be in the range of from 0.5% to 5%, in particular, from 1.0% to 2.5% by weight based on the weight of the chewy sweet.The chewy sweet may further comprise a humectant such as glycerol, flavour, artificial sweetners for sugar free products, emulsifiers e.g. lecithin, flavour enhancers e.g. talin, colour, protein, for example, egg white or milk protein in the case of aerated systems, and other additives, the amounts and type of which will depend on the end product. Suitable amounts of these additives are from 0.1% to 5%, in particular, from 0.2-2.0% by weight based on the weight of the chewy sweet. The remainder of the chewy sweet is water and the amount of water in the finished chewy sweet of the invention may be from 5% to 20%, preferably from 6% to 15% by weight based on the weight of the chewy sweet.Preferably, the chewy sweet of the present invention is a composition based on a syrup matrix comprising a solution of sugars, sugar substitutes and/or starch hydrolysate syrups (glucose syrup) in water. Other ingredients may be dissolved or dispersed within the syrup matrix in order to modify the texture, flavour and appearance of the end product as desired, for example, fats, flavours, colouring agents, acids, hydrocolloids, maltodextrins, emulsifiers, sugar crystals, aerating agents etc. Examples of other hydrocolloids which may be present in the end product are: agar agar, xanthane gum, locust bean gum, gellan gum, pectin, carrageenan and guar gum.

The chewy sweets of the present invention may be prepared by conventional methods. For example, the ingredients may be blended to form a syrup, then cooked, shaped and, if necessary, dried. The processing methods selected will affect the final texture of the products. It is necessary for the products to be heated during processing in order to gelatinise at least a major part, preferably all, of the oxidised starch in the final product.

The ingredients may be blended with agitation, for example, using conventional stirrers. A syrup of sugars, oxidised starch and water is preferably blended first followed by the addition of the remaining additives, for example, acid, flavour, colour, humectants, etc. (acid, flavour etc. is normally added after (cooking) to give a syrup having a desired final solids content. The initial mixture of ingredients may be cooked by open pan, boiling in, for example, by use of a jet cooker, coil cooker, plate heat exchanger or a cooker extruder. The operating conditions will vary depending on the cooking equipment, formulation ingredients etc., which are selected. The product may then be shaped using conventional techniques and subjected to a cooling/drying stage as required.

More elaborate manufacturing processes include a wide range of cooking processes, such as continuous evaporation and continuous starch cooking, the inclusion of an aerating stage by beating or pulling, continuous cooling, such as, by cooling rollers, and forming operations such as extrusion, rope forming, cut and wrap or dye-forming.

The following examples provide formulation and processing details for gelatin-free chewy sweets according to preferred embodiments of the invention. The examples are intended for illustrative purposes and are not intended to be limiting.

### Example 1

A chewy sweet in which a combination of oxidised starch and gum arabic replaces the gelatin in the final product is produced by a method wherein 3.5% oxidised starch and 1.5% gum arabic (dry content) is cold slurried in water and then heated at 95°C. Sugar is then dissolved into the cooked mass (42.1% dry), before adding glucose syrup (45.8% dry), fat (4.0% dry) and invert syrup (3% dry). A second cooking stage follows using plate heat exchanger and flash stage to give a final moisture content of 6-7%. Further processing of the cooked mass can follow using conventional processes.

### Example 2

A chewy sweet having the following formulation is produced according to the present invention.

| | % by weight |
|---|---|
| crystalline sucrose | 35 |
| glucose syrup (42DE) | 35 |
| oxidised starch | 5 |
| gum arabic | 5 |
| fat | 5 |
| water | 15 |

The chewy sweet is produced by a simple process operating the open pan method for cooking using a stirred steamed-jacketed confectionery boiling pan. The recipe water is heated to boiling (100°C) and the oxidised starch is added preferably as a dry mix with gum arabic. A high speed mixer is employed to give rapid dispersion. The oxidised starch gelatinises on dispersion in excess hot water. All of the remaining ingredients are then combined with this solution. The batch is heated using a steam jacket to obtain a boiling temperature probably in the range of 115-125°C, depending on the final texture desired. Once the final cooking temperature is reached, the mass may be cooled, for example, by casting onto a cold slab. The product can then be apportioned as required.

## Claims

1. A sugar-based or sugar-free chewy sweet comprising from 0.5% to 20% of oxidized starch and from 1 to 10% of gum arabic by weight of the chewy sweet, and wherein the chewy sweet is not a chewing gum, toffee, gum, or jelly.

2. A sugar-based or sugar-free chewy sweet according to claim 1 which comprises from 30% to 90% of syrup or sugars and/or sugar replacements by weight of the chewy sweet, and from 5% to 20% of water by weight of the chewy sweet.

3. A sugar-based chewy sweet according to claim 1 which comprises from 30% to 90% of sugar and glucose syrup by weight of the confectionery product, and from 5% to 20% of water by weight of the chewy sweet.

4. A sugar-based or sugar-free chewy sweet according to claim 1 which is gelatin-free.

5. A sugar-based or sugar-free chewy sweet according to claim 1 in which the chewy sweet is centre-filled with a liquid or syrup centre or powder.

6. A sugar-based or sugar-free chewy sweet according to claim 1 further containing from 0.5% to 5% by weight of the chewy sweet of one or more of fats, food-acceptable acids, fruit juices, vegetable juices and from 0.1% to 5% by weight of the chewy sweet of one or more of humectants, flavours, artificial sweeteners, emulsifiers, flavour enhancers, colour, and protein.

7. A process for the preparation of a sugar-based or sugar-free chewy sweet according to claim 1 which comprises heating the oxidised starch to result in gelatinisation of the oxidised starch, mixing said gelatinised starch with remaining ingredients of the end product, cooking the formulation mixture thus obtained, and shaping the cooked mass to produce the chewy sweet.

8. A process for the preparation of a sugar-based or sugar-free chewy sweet according to claim 2 which comprises blending a syrup of sugars or sugar substitutes with oxidized starch and water to produce a mixture, heating the mixture to gelatinize the oxidized starch, cooking the mixture to provide a cooked mass, and shaping the cooked mass to produce the chewy sweet.

## Patentansprüche

1. Kaubare Süßigkeit auf Zuckerbasis oder zuckerfreie Süßigkeit, die, bezogen auf das Gewicht der kaubaren Süßigkeit, von 0,5 bis 20 Gew.-% oxidierte Stärke und von 1 bis 10 Gew.-% Gummi arabicum aufweist, und wobei die kaubare Süßigkeit kein Kaugummi, Toffee, Gummi oder Gelee ist.

2. Kaubare Süßigkeit auf Zuckerbasis oder zuckerfreie Süßigkeit nach Anspruch 1, die, bezogen auf das Gewicht der kaubaren Süßigkeit, von 30 bis 90 Gew.-% Sirup oder Zucker und/oder Zuckerersatzstoffe aufweist, und, bezogen auf das Gewicht der kaubaren Süßigkeit, von 5 bis 20 Gew.-% Wasser.

3. Kaubare Süßigkeit auf Zuckerbasis nach Anspruch 1, die bezogen auf das Süßwarenprodukt, von 30 bis 90 Gew.-% Zukker und Glucosesirup aufweist und, bezogen auf die kaubare Süßigkeit, von 5 bis 20 Gew.-% Wasser.

4. Kaubare Süßigkeit auf Zuckerbasis oder zuckerfreie Süßigkeit nach Anspruch 1, die gelatinefrei ist.

5. Kaubare Süßigkeit auf Zuckerbasis oder zuckerfreie Süßigkeit nach Anspruch 1, wobei die kaubare Süßigkeit ein mit einer Flüssigkeit oder einem Sirup gefülltes Zentrum oder mit einem Pulver gefülltes Zentrum aufweist.

6. Kaubare Süßigkeit auf Zuckerbasis oder zuckerfreie Süßigkeit nach Anspruch 1, die außerdem, bezogen auf das Gewicht der kaubaren Süßigkeit, von 0,5 bis 5 Gew.-% von einem oder mehreren von Fetten, für Nahrungsmittelzwecke annehmbaren Säuren, Fruchtsäften, Pflanzensäften und, bezogen auf das Gewicht der kaubaren Süßigkeit, von 0,1 bis 5 Gew.-% von einem oder mehreren von Feuchthaltemitteln, Aromen, künstlichen Süßungsmitteln, Emulgatoren, Aromaverstärkern, Farbe und Protein enthält.

7. Verfahren zur Herstellung einer kaubaren Süßigkeit auf Zuckerbasis oder zuckerfreien Süßigkeit nach Anspruch 1, das das Erhitzen der oxidierten Stärke, bis eine Verkleisterung der oxidierten Stärke erhalten wird, das Vermischen der verkleisterten Stärke mit den restlichen Bestandteilen des Endproduktes, das Kochen der auf diese Weise erhaltenen Mischungsformulierung und das Formen der gekochten Masse zur Herstellung der kaubaren Süßigkeit umfasst.

8. Verfahren zur Herstellung einer kaubaren Süßigkeit auf Zuckerbasis oder zuckerfreien Süßigkeit nach Anspruch 2, das das Vermischen eines Sirups aus Zuckern oder Zuckerersatzstoffen mit oxidierter Stärke und Wasser unter Erzeugung einer Mischung, das Erhitzen der Mischung zur Verkleisterung der oxidierten Stärke, das Kochen der Mischen, um eine gekochte Masse zu erhalten, und das Formen der gekochten Masse zur Herstellung der kaubaren Süßigkeit umfasst.

## Revendications

1. Bonbon tendre à base de sucre ou sans sucre comprenant de 0,5% à 20% d'amidon oxydé et de 1 à 10% de gomme arabique en poids du poids du bonbon tendre, et dans lequel le bonbon tendre n'est pas une gomme à mâcher, un caramel, une boule de gomme ou un bonbon gélifié.

2. Bonbon tendre à base de sucre ou sans sucre selon la revendication 1, comprenant de 30% à 90% de sirop ou de sucres et/ou de substituts de sucre en poids du poids du bonbon tendre, et de 5% à 20% d'eau en poids du poids du bonbon tendre.

3. Bonbon tendre à base de sucre selon la revendication 1, comprenant de 30% à 90% de sucre et de sirop de glucose en poids du poids du produit de confiserie, et de 5% à 20% d'eau en poids du poids du bonbon tendre.

4. Bonbon tendre à base de sucre ou sans sucre selon la revendication 1, qui est exempt de gélatine.

5. Bonbon tendre à base de sucre ou sans sucre selon la revendication 1, dans lequel le bonbon tendre est fourré en son centre d'un liquide ou d'un centre en sirop, ou d'une poudre.

6. Bonbon tendre à base de sucre ou sans sucre selon la revendication 1, contenant en outre de 0,5% à 5% en poids du poids du bonbon tendre d'un ou plusieurs parmi des matières grasses, des acides de qualité alimentaire, des jus de fruits, des jus de légumes, et de 0,1% à 5% en poids du poids du bonbon tendre d'un ou plusieurs parmi des humectants, des aromatisants, des édulcorants artificiels, des émulsifiants, des exhausteurs de goût, des colorants et des protéines.

7. Procédé de préparation d'un bonbon tendre à base de sucre ou sans sucre selon la revendication 1, comprenant le chauffage de l'amidon oxydé afin d'obtenir la gélatinisation de l'amidon oxydé, le mélange dudit amidon gélatinisé avec les ingrédients restants du produit final, la cuisson du mélange de formulation ainsi obtenu et la mise en forme de la masse cuite pour produire le bonbon tendre.

8. Procédé de préparation d'un bonbon tendre à base de sucre ou sans sucre selon la revendication 2, comprenant le mélangeage d'un sirop de sucres ou de substituts de sucre avec de l'amidon oxydé et de l'eau pour produire un mélange, le chauffage du mélange afin de gélatiniser l'amidon oxydé, la cuisson du mélange pour produire une masse cuite et la mise en forme de la masse cuite pour produire le bonbon tendre.
